# EUROPEAN PATENT APPLICATION

(11) **EP 3 581 257 A1**
(43) Date of publication of application: **18.12.2019**
(21) Application number: 18176964.7
(22) Date of filing: 11.06.2018
(51) Int. Cl.: B01D 53/34, B01D 53/62, B01D 53/50, B01D 53/82

(54) **METHOD USING RECYCLED CONCRETE FINES FOR CO2/SOX REMOVAL FROM EXHAUST GAS**

(71) Applicant: HeidelbergCement AG, 69120 Heidelberg (DE)
(72) Inventor: SKOCEK, Jan, 69181 Leimen (DE); ZAJAC, Maciej, 69126 Heidelberg (DE); BEN HAHA, Mohsen, 69117 Heidelberg (DE)
(74) Representative: Zellentin & Partner mbB Patentanwälte

(57) **Abstract**

Method of exhaust gas cleaning comprising providing waste material rich in carbonatable Ca and/or Mg phases and with d₉₀ ≤ 1000 µm in a stockpile or silo, flushing the waste material with the exhaust gas containing CO₂ and/or SOₓ and withdrawing carbonated and/or sulphurized waste material and purified exhaust gas, as well as use of a waste material pile for exhaust gas cleaning and device (1, 10) for cleaning exhaust gas (50) from CO₂ and/or SOₓ.

## Description

The present invention relates to the use of a waste material pile for exhaust gas cleaning and to a method and device for exhaust gas cleaning from CO₂ and/or SOₓ, with x from 0 to 3.

Cement is an important construction material on the one hand, but on the other cement industry is straggling with the high CO₂ emissions related to the production of the cement clinker. The production of Portland cement, an essential constituent of concrete, leads to the release of significant amounts of carbon dioxide (CO₂), a greenhouse gas. It is said that the production of one ton of Portland cement clinker creates approximately one ton of CO₂. Approximately half of the CO₂ emissions from cement production stem from the calcination of limestone, i.e. the process where limestone is burnt and CO₂ gas is released to the atmosphere.

Further, emissions of sulphur oxides (SOₓ) are also inherent in the cement manufacturing process. The presence of sulphur-based compounds in the raw materials has a great impact on the cement industry, owing to the large amount of limestone used in the process, especially when the deposits have a high content of pyrite (FeS₂). SOₓ is also generated from the burning of sulphur from the fuel used in the kiln or from waste typically burned in cement plants which can contain organic sulphur compounds. However, the allowed amounts of SOₓ emissions are limited. The inhalation of such substances entails risks to human health, and their interaction with the atmosphere results in the formation of sulfuric acid causing acid rain.

Since the basic chemistry cannot be changed, the industry tries to find other ways to reduce the CO₂ and SOₓ output. The easiest solution to limit this environmental CO₂ footprint is to produce composite cements. Unfortunately the increase of the proportion of the composite cements in the product portfolio is limited by the availability of high quality supplementary cementitious materials (SCMs), i.e. reactive materials resulting in appreciable strength development.

Carbon capture and storage (CCS) technologies have also been developed to mitigate the CO₂ emission from cement plants or coal fired power plants. However, these technologies did not reach technology development allowing for the full scale application. Additionally these technologies are cost intensive.

Natural carbonation of cement-based materials is a potential way to reduce the carbon footprint related to cement manufacturing process and use. Carbonation takes place during service life and after demolition when crushed concrete pieces are exposed to the atmosphere during a stockpiling period. Theoretically, due to the instability of hydration compounds in the presence of CO₂ (even in the case of the very low 0.04% CO₂ concentration which prevails in the atmosphere) concrete is able to absorb over time almost the same amount of CO₂ as that was initially chemically released during the calcite calcination in the cement kiln.

CO₂ reabsorption by carbonation is particularly relevant for recycled concrete aggregates (RCA) taken from demolition sites of concrete building and infrastructure. During concrete recycling, concrete is crushed and the smaller particle size accelerates the carbonation. After extraction of coarse recycled aggregates, the remaining fines are characterized by a quite high reacted cement content (an high amount of CO₂ can thus be absorbed). A similar approach can be used for other Ca- or Mg-rich waste material (e.g. fly ashes, slag etc.). Using natural carbonation to capture CO₂ in these materials, and particularly in recycled concrete fines (RCF), has already been proposed in recent studies, see e.g. Engelsen et al. "Carbon Dioxide Uptake in Demolished and Crushed Concrete", BYGGFORSK Norwegian Building Research Institute, Project report 395, Oslo 2005 and B. Lagerblad "Carbon Dioxide Uptake During Concrete Life Cycle: State of the Art", Tech. Rep. Swedish Cement and Concrete Research Institute, 2005. However, the carbonation of the stock pile concrete using air is a very long process, taking hundreds of years.

Therefore, reducing CO₂ emissions related to concrete production is a current challenge and is today a driver for innovations. At the same time the circular economy requires the reuse of the waste material streams. This includes the recycling and reuse of the used concrete. There are several examples of the application of RCA and RCF for the production of the concrete. The applicability of RCF in cement and concrete manufacturing is challenging due to inappropriate characteristics of the RCF such as high water demand and low to no latent hydraulic or pozzolanic reactivity. Similarly, the application of some high calcium fly ashes is challenging.

Not prior published European patent application No. 17207076.5 filed on Dec. 13, 2017 proposes carbonated RCF as supplementary cementitious materials. Carbonation is said to be achievable by exposing the RCF to exhaust gases. The document does not consider an effect of carbonation on the gas.

Also, techniques for removal of SOₓ emissions from the cement industry have been suggested. These techniques fall into three broad categories: inherent removal by the process, process alterations, and SOₓ scrubbing technologies. Process alterations reduce the amount of SOₓ generated while scrubber technologies capture SOₓ after it has been generated. Some kiln systems can potentially reduce the amount of SOₓ generated through the use of process alterations, such as equipment changes, alterations to operating procedures, and/or raw material or fuel changes. Scrubber technologies that capture SOₓ after it has been generated in the kiln system can be divided into four classes: dry reagent injection, hot meal injection, lime/limestone spray dryer absorber, and wet scrubbers. The overall sulphur capture efficiency is dependent on the type of absorbent injected, temperature of the injection zone, fineness of the absorbent, and residence time. An example of a dry reagent system is the addition of calcium hydroxide (Ca(OH)₂) to the kiln feed or its injection in the riser duct between the two upper cyclones of a preheater. A hot meal injection system uses calcined material from the kiln system as a source of lime (CaO) for the absorption of SOₓ. A lime/limestone spray dryer system injects a slurry of lime or limestone into the conditioning tower of the preheater. However, equipment changes and operating alterations are cost intensive. Replacing one raw material with another raw material may not be economically feasible and increasing alkali input for reducing the sulphur may not be possible because of product quality limits on total alkali concentration in the cement.

There remains a need for development of a cost-effective process to reduce the CO₂ footprint and/or SOₓ emission of cement manufacturing. Furthermore, there is an ongoing need for cost saving, easy, and effective exhaust gas cleaning, especially in respect of carbon dioxide and sulphur oxides.

Surprisingly it has now been found that waste materials rich in carbonatable Ca and/or Mg phases and with high specific surface area, in particular recycled concrete fines (RCF), are able to absorb significant amounts of CO₂ and SOₓ from exhaust gases, in particular from exhaust gases emitted by cement plants and coal fired power plants. RCF stockpiles equipped with suitable gas introduction systems provide a significant potential for CO₂ and SOₓ sequestration from exhaust gases. At the same time carbonation allows valorization of the RCF or other waste materials due to improved quality of the obtained carbonated material. This can be used as high quality SCM which enables high clinker replacement ratios and extension of the composite cement production.

Thus, the present invention solves the aforementioned problems through the use of a stockpile or silo containing waste material rich in carbonatable Ca and/or Mg phases and with d₉₀ ≤ 1000 µm for exhaust gas cleaning. The object is furthermore achieved by a method for exhaust gas cleaning comprising the steps of providing waste material rich in carbonatable Ca and/or Mg phases and with d₉₀ ≤ 1000 µm, in particular recycled concrete fines (RCF), passing the exhaust gas containing CO₂ and/or SOₓ through the waste material thereby carbonating and/or sulphating the waste material and withdrawing a carbonated and/or sulphurized waste material and the purified exhaust gas.

Thus, it has unexpectedly been found that carbonation and/or sulphurization of these waste materials, designated Ca/Mg-rich waste material or only waste material in the following, in a stockpile or silo affords an improved process for cleaning exhaust gases containing CO₂ and/or SOₓ. In particular the technology costs can be reduced, since simplicity of the method and device allows low investment costs. Furthermore, the present invention enables valorization of waste materials into added value products and provides an opportunity to secure new resources for composite cement production by valorization of RCF and other waste materials.

These and other features, aspects, and advantages of the present invention will become better understood upon consideration of the following detailed description, drawings, and appended claims.

In the context of this invention, carbonation means a chemical process where CO₂ reacts with Ca compounds, especially the cement hydration products from CaO, which are mainly calcium hydroxide CH (it is recalled that, according to cement chemist notation, C=CaO, H=H₂O, S=SiO₂ and C=CO₂) and calcium silicate hydrates C-S-H. The analogous reaction with Mg compounds is included. Carbonatable means that carbonation occurs under ambient conditions.

The concept of the carbonation chemistry is well described elsewhere, e.g. in Engelsen et al cited before. During carbonation the carbon dioxide gas or carbonate ions have to pass through a carbonated surface into the material to reach fresh concrete. The speed of transport is mainly governed by concentration gradients, transport media (porosity) and thickness of the already carbonated concrete. Concrete carbonation is a very slow process since it is mainly governed by CO₂ diffusion through the porous network of the concrete. This explains that a full carbonation level can only be reached in a long-term perspective. The total amount of CO₂ uptake is increased after demolishing stage. CO₂ reabsorption by carbonation could be therefore particularly relevant for recycled concrete. During concrete recycling, concrete is crushed and the smaller particle size accelerates the carbonation. After extraction of coarse recycled aggregates, the remaining fines are characterized by a quite high reacted cement content (an high amount of CO₂ can thus be absorbed). Carbonation rate will be faster after demolition compared to the service life of concrete due to the increased surface area of finer particles when calculated by weight. Thus, the rate will increase with decreasing grain size fraction. The smaller the particle size, the faster the carbonation rate, even in the case of low water to cement ratio. Similar rules apply to sulphurization.

According to the invention waste materials rich in carbonatable Ca and/or Mg phases, e.g. hydrates, and with high specific surface area, preferably selected from RCA and RCF (recycled concrete aggregates and fines), fly ashes, slags and mixtures thereof, are used for cleaning the exhaust gas. Rich in carbonatable Ca and/or Mg phases means that at least 12.5 wt.-% of the waste material calculated as oxides is CaO and/or MgO and at least 80 wt.-% of the CaO and MgO is in carbonatable phases before carbonation. Preferably, CaO and/or MgO constitute at least 20 wt.-%, more preferably at least 30 wt.-% and most preferred at least 50 wt.-% of the waste material. Preferably, at least 85 wt.-%, more preferably at least 90 wt.-% of the CaO and MgO are in carbonatable phases. Thus, while a part of the carbonatable CaO and MgO in the waste material might be already carbonated before carbonation, at least 10 wt.-% of the material calculated as oxides is carbonatable but not yet carbonated CaO and/or MgO.

Gaseous CO₂ cannot, however, react directly with the Ca and Mg compounds like calcium silicate hydrates, magnesium silicate hydrates, and calcium magnesium silicate hydrates of the cement. Thus, the CO₂ gas must first dissolve in water and form carbonate ions that in turn will react with the Ca and/or Mg ions of the pore water. Due to the coupled diffusion mechanism, humidity is one of the controlling factor. In concrete with water filled connective pores the transport mechanism is ion diffusion leading to slow carbonation. In dry concrete the CO₂ gas diffusion is fast but the lack of water also leads to slow carbonation. Thus, there is a relative humidity (RH) optimum for optimal carbonation rate which is generally accepted to be in the RH range of 50 - 60 %. If necessary, humidity of the concrete fines can be adjusted to about 50 to 60 % RH. The same applies mutatis mutandis to the SOₓ which to must also dissolve in water to react.

If necessary, the Ca/Mg-rich waste material can be subjected to a pretreatment stage according to the invention. For example, the Ca/Mg-rich waste material can be subjected to a mechanical treatment, especially grinding, in order to improve fineness and thereby carbonation/sulphurization rate, i.e. ensure faster and more even carbonation/sulphatation. The particle size distribution determined by laser granulometry of RCF useful as the Ca/Mg-rich waste material according to the invention conforms to a d₉₀ ≤ 1000 µm, preferably to a d₉₀ ≤ 500 µm, more preferably to a d₉₀ ≤ 200 µm, most preferably to a d₉₀ ≤ 100 µm, preferably with a Rosin-Rammler slope n from 0.6 to 1.4, more preferably from 0.7 to 1.2.

The pretreatment can also include blending the waste material(s) with additional substances that accelerate the carbonation process and/or improve the final properties of the carbonated waste material, especially of a synthetic SCM when RCF are used as starting material. Preferably, substances for enhancing grinding or carbonating process or mixtures of two or more thereof are used as additional substances, Typically, additional substances will be included in an amount from 0.001 to 1 wt.-% with respect to the total waste material. Suitable substances include aqueous solvents like alkanolamines, for example primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures thereof, halogenides, ehtylenedinitrilotetraacetic acid (EDTA) or other substances that improve dissolution of CO₂ in the pore solution. Additionally enzymes such as carbonic anhydrase can be used to enhance carbonation efficiency and modify the properties of the reaction products.

The waste material, optionally after pretreatment and/or adjustment of RH and/or admixing additional substances, is subjected to carbonation and/or sulphurization for cleaning it from CO₂ and/or SOₓ according to the invention. Therein, the waste material is stockpiled or put into a silo and subjected to flushing with the exhaust gas that has a higher CO₂ and/or SOₓ concentration than atmospheric concentration of CO₂ and/or SOₓ.

According to the invention, the flushing can be achieved e.g. by direct exposure to exhaust gas from a near-by cement plant or waste incineration or coal fired power plant. In particular the raw exhaust gases from the plants are cleaned, since the CO₂ and/or SOₓ concentration is high. This has the advantage that very little investment is needed since e.g. cement plant exhaust gas occurs in close proximity. Furthermore, the direct use of exhaust gases for carbonation and/or sulphurization of waste materials allows to increase the CO₂ and/or SOₓ sequestration level due to the high concentration of CO₂ and/or SOₓ. Additionally, because the higher concentration of CO₂ and/or SOₓ used, more hydrates will be carbonated and/or sulphurized and therefore this allows to improve CO₂ and/or SOₓ storage in the waste materials. A typical exhaust gas from a rotary kiln for clinker manufacturing comprises: 14-33 Vol-% CO₂ depending on the clinkering technology, used fuels and raw materials, see e.g. "Carbon dioxide Capture and Storage: Special Report of the intergovernmental panel on climate change", P. Metz, Cambridge University Press, 2005, p. 79. It can further comprise from 0.002 to 0.2 Vol.-% SOₓ in the raw gas, depending mainly on the raw materials and fuel used but also on process settings. In principle it is also possible to clean exhaust gas from remote sources. However, for gas transport, the gasses would need to be cleaned and concentrated. This is no problem technically but it is preferable above all for cost reasons to erect a new stockpile instead of transporting the exhaust gas.

The gases cleaned according to the invention can also be adjusted in humidity and/or temperature for drying or wetting of the stockpiled waste material to assure the maximum carbonation and/or sulphatation rate.

The raw exhaust gases can be also treated to increase CO₂ or SOₓ concentration. If carbonated RCF with low sulphur content is desired as by-product of the method, the exhaust gases can be also cleaned from sulphur.

The carbonation and/or sulphurization process rate increases with increasing temperature. Thus, the heat of the exhaust gases can be further used to accelerate the carbonation process. Preferably, the temperature is adjusted to range from 10 to 150 °C, more preferably from 20 to 100 °C and most preferably to 40 to 80 °C. But ambient temperature is also suitable and is preferably used when heating would be needed otherwise.

Another possibility to enhance reaction rate and rate of exhaust gas cleaning would be the use of increased pressure. However, usually the gain in rate is not able to outweigh the expenditure needed to allow increased pressure, so typically the flushing takes place at ambient pressure. If increased pressure is possible, 0.01 to 4 bar overpressure, preferably 0.1 to 2 bar overpressure are useful.

The carbonation and/or sulphurization can take place in a closed compartment, e.g. a storage hall originally designed for cement or a clinker silo with the pneumatic mixing arrangement originally designed for cement, raw meal or other raw materials used for cement production or for cement constituents. However, a stockpile is the easiest approach. The waste material can be piled e.g. with bulldozers or from a conveyor boom. It is possible but not necessary to provide side walls on one, two, three or all sides or forming a circle or U shape. The stockpile may need to be protected from rain and surface water to optimize the carbonation/sulphurization conditions.

A gas introduction system is arranged at the bottom of the stockpile or silo. The system comprises conduits for passing the exhaust gas to a number of distributors typically comprising several openings e.g. nozzles. The distributors are arranged at the bottom of the stockpile or silo evenly distributed over the whole bottom section and are designed to generate a homogeneous flow of the exhaust gas. Thereby a uniform distribution of exhaust gas and the contained CO₂ through the waste material can be achieved. The exhaust gas flows in vertical direction with respect to the stockpile.

In one preferred embodiment of the invention the Ca/Mg-rich waste material is placed into a silo and subjected to a carbonating and/or sulphating atmosphere by flushing the material in the silo with the exhaust gas which has higher CO₂ and/or SOₓ concentration than atmospheric concentration of CO₂ and/or SOₓ. The method can further comprise a step of withdrawing the carbonated/sulphurized waste material, in particular the carbonated RCF, through a bottom discharge outlet.

The treated exhaust gas can be further captured and processed as done currently. Such processing includes processes such as e.g. dust removal, gas cooling, gas conditioning or using the gas for other technological purposes such as heat recovery or drying of wet materials.

The invention will be illustrated further with reference to the attached figures, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approx.", "around" and similar expression in relation to a numerical value means that up to 10 % higher and lower values are included, preferably up to 5 % higher and lower values, and in any case at least up to 1 % higher and lower values, the exact value being the most preferred value or limit.

Brief description of the figures:
Fig. 1 schematically shows an embodiment of the method according to the invention using a stockpile,
Fig. 2 schematically shows an embodiment of the method according to the invention using a silo.

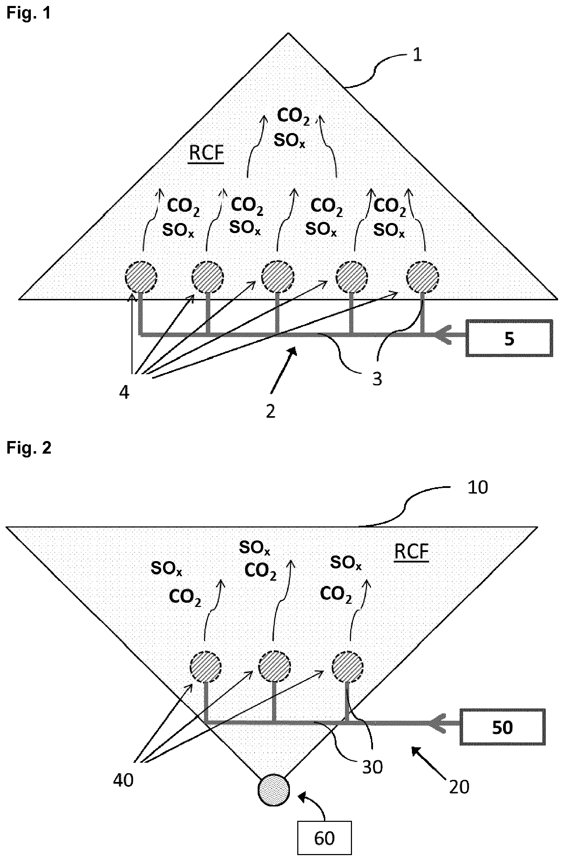

In figure 1 the waste material, in particular recycled concrete fines RCF, is stockpiled, optionally after a mechanical pretreatment. The stockpile 1 comprises a gas introduction system 2 comprising conduits 3 and gas distributors 4. Exhaust gas 5 is passed into the conduits 3 and discharged into the stockpile 1 by the distributors 4. The conduits 3 are arranged at the bottom of the stockpile 1. Exhaust gas 5 is introduced into the RCF by the distributors 4, which can be nozzles for example. The exhaust gas 5 flows in vertical direction with respect to the stockpile 1 thereby contacting contained CO₂ and/or SOₓ with the waste material. The RCF is carbonated and/or sulphurized by flushing the stockpile bed with the exhaust gases containing CO₂ and/or SOₓ.

Fig. 2 schematically shows an embodiment of the method according to the invention, wherein the Ca/Mg-rich waste material, here recycled concrete fines RCF, are placed into a silo 10, optionally after the pretreatment. Carbonation and/or sulphurization of the RCF is performed in the silo 10 by exhaust gas 50. This is provided by gas distribution system 20 through conduits 30 arranged at the bottom of the silo 10 and introduced through distributors 40. The exhaust gas 50 flows in vertical direction with respect to the silo 10. The waste material is carbonated and/or sulphurized by flushing the exhaust gas 50 through the waste material. The silo 10 can contain a bottom discharge outlet 60 for withdrawing the obtained carbonated/sulphurized RCF.

### List of reference numbers

- 1: stockpile
- 2: gas introduction system
- 3: conduit
- 4: gas distributor
- 5: exhaust gas
- RCF: waste material
- 10: silo
- 20: gas introduction system
- 30: conduit
- 40: gas distributor
- 50: exhaust gas
- 60: carbonated RCF discharge
- RCF: waste material

## Claims

1. Method for cleaning an exhaust gas from CO₂ and/or SOₓ comprising the steps:
- providing a waste material rich in carbonatable Ca and/or Mg phases and with d₉₀ ≤ 1000 µm in a stockpile or silo,
- flushing the waste material with the exhaust gas providing a carbonated and/or sulphurized waste material, and
- withdrawing the carbonated and/or sulphurized waste material and cleaned exhaust gas.

2. Method according to claim 1, wherein the waste material is selected from recycled concrete fines, recycled concrete aggregates, fly ashes, slags, and mixtures thereof.

3. Method according to claim 1 or 2, wherein at least 12.5 wt.-% of the waste material calculated as oxides is CaO and MgO and at least 80 wt.-% of the CaO and MgO are in carbonatable phases before carbonation.

4. Method according to claim 3, wherein CaO and MgO constitute at least 20 wt.-%, preferably at least 30 wt.-% and most preferred at least 50 wt.-% of the waste material and/or at least 85 wt.-%, preferably at least 90 wt.-% of the CaO and MgO are in carbonatable phases.

5. Method according to one of claims 1 to 4, additionally comprising mechanical pretreatment of the waste material, especially grinding.

6. Method according to one of claims 1 to 5, wherein the waste material has a particle size distribution having a d₉₀ ≤ 500 µm, preferably d₉₀ ≤ 200 µm, more preferably a d₉₀ ≤ 100 µm, and a Rosin-Rammler slope n from 0.6 to 1.4, preferably from 0.7 to 1.2.

7. Method according to one of claims 1 to 6, wherein carbonation and/or sulphurization takes place in a silo and the method further comprises a step of withdrawing the carbonated and/or sulphurized waste material through a bottom discharge outlet.

8. Method according to one of claims 1 to 7, wherein the exhaust gas is taken from a coal fired power plant or preferably from a cement plant.

9. Method according to one of claims 1 to 8, wherein the exhaust gas is treated to increase the concentration of contained CO₂ or SOₓ with x from 0 to 3.

10. Method according to one of claims 1 to 9, wherein sulfur is removed from or diminished in the exhaust gas prior to flushing the waste material with the exhaust gas.

11. Method according to one of claims 1 to 10, wherein the exhaust gas is introduced at the bottom of the stockpile or silo and flows through the waste material in vertical direction.

12. Method according to one of claims 1 to 11, wherein the cleaned exhaust gas is further subjected to one or more of:
- dust removal,
- gas cooling,
- gas conditioning,
- heat recovery,
and/or used for drying of wet materials.

13. Use of a stockpile or silo containing waste material rich in carbonatable Ca and/or Mg phases and with d₉₀ ≤ 1000 µm for cleaning exhaust gas from CO₂ and/or SOₓ according to anyone of claims 1 to 12.

14. Device for cleaning exhaust gas (5, 50) from CO₂ and/or SOₓ, wherein the device comprises a waste material rich in carbonatable Ca and/or Mg phases and with d₉₀ ≤ 1000 µm arranged as a stockpile (1) or contained in a silo (10) as absorbent for CO₂ and/or SOₓ, and a gas introduction system (2, 20) for the exhaust gas (5, 50) at the bottom of the stockpile (1) or silo (10).

15. Device according to claim 14, wherein the gas introduction system (2, 20) comprises branched conduits (3, 30) for passing the exhaust gas (5, 50) into the stockpile (1) or silo (10) and having gas distributors (4, 40), preferably multiple openings or nozzles, at each conduit end to distribute the exhaust gas (5, 50) in the waste material.

16. Device according to claim 14 or 15, wherein discharge means (60) for carbonated and/or sulphurized waste material are provided at the bottom of the silo (10).
